# EUROPEAN PATENT SPECIFICATION

(11) **EP 3 624 042 B1**
(45) Date of publication and mention of the grant of the patent: **23.07.2025**
(21) Application number: 18194545.2
(22) Date of filing: 14.09.2018
(51) Int. Cl.: G06Q 40/02, G06Q 20/40

(54) **SYSTEM AND METHOD FOR VERIFICATION OF FINANCIAL TRANSACTIONS**
SYSTEM UND VERFAHREN ZUR VERIFIZIERUNG FINANZIELLER TRANSAKTIONEN
SYSTÈME ET PROCÉDÉ DE VÉRIFICATION DE TRANSACTIONS FINANCIÈRES

(43) Date of publication of application: 18.03.2020
(73) Proprietor: Deloitte AG, 8022 Zurich (CH)
(72) Inventor: MEHTA, Uday, 8706 Zurich (CH); JOSEPH, David, 8022 Zurich (CH)
(74) Representative: Grünecker Patent- und Rechtsanwälte PartG mbB

(56) References cited:
- WO-A2-2008/061132
- US-A1- 2007 250 441
- US-A1- 2012 109 802
- US-A1- 2015 081 549
- US-A1- 2016 132 886
- US-A1- 2017 091 773

## Description

### BACKGROUND

The present disclosure relates to computer-implemented systems and methods for the verification of financial transactions. More specifically, the present disclosure relates to techniques for the more efficient and, in some respects also more effective generation of suspicious activity reports (SARs).

Financial institutions are involved in millions of financial transactions per day. Further, financial institutions independently perform financial transaction monitoring. Such transaction monitoring is performed to meet the legal requirements for financial institutions and other regulated entities to prevent or report money laundering, terrorist financing or other crimes. Transaction monitoring systems may, for example, identify suspicious patterns of transactions, confirm client identity and identify large cash transactions that are required to be reported by law (i.e. where the value of the transaction exceeds a threshold amount). When a suspicious transaction or potentially suspicious transaction is identified, a suspicious activity report (SAR) is generated which is then filed with the relevant financial crime enforcement agency or financial regulator.

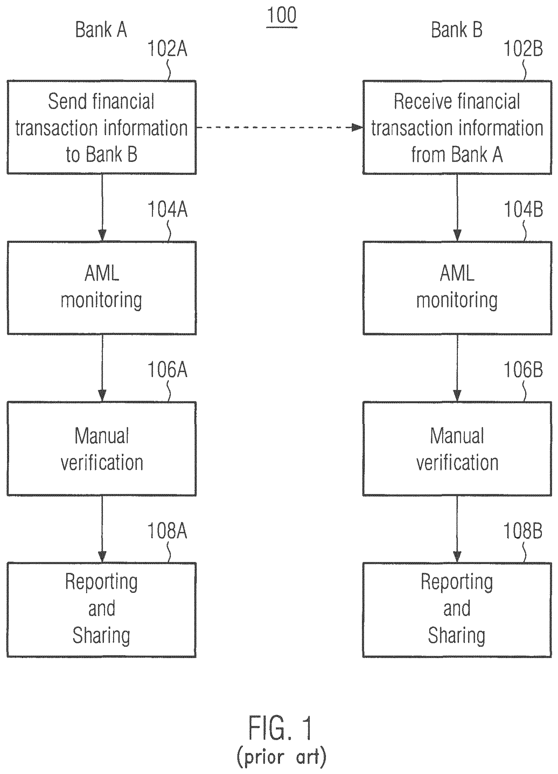

Figure 1 illustrates a prior art method employed by financial institutions, such as banks, to detect suspicious financial transactions.

A client of Bank A initiates a financial transaction via, for example, a payment portal. The recipient is a client of Bank B. Thus, in a first step 102A, 102B financial transaction information is sent from Bank A to Bank B. Both Banks A and B will perform financial transaction monitoring, such as anti-money laundering (AML) monitoring at steps 104A and 104B. Each Bank will use its own internal financial transaction rules, transaction history and know-your-customer (KYC) information to determine whether each financial transaction initiated by or received at the bank is a suspicious or potentially suspicious transaction. Accordingly, while Bank A may identify a particular transaction as a potentially fraudulent transaction and trigger a corresponding alert, Bank B may not identify that particular transaction as a potentially fraudulent transaction and vice versa. Furthermore, due to finance regulations and also for competition reasons, financial institutions are not permitted to share client data with third parties. Therefore, if Bank A were to identify a particular transaction as being a potentially fraudulent transaction, Bank A could not alert Bank B.

Because prior art methods are highly individualistic in nature, where each bank acts on its own under regional regulatory body recommendations, the process leads to inefficiencies and does not allow the complete chain of transactions to be verified.

From millions of financial transactions per day, the financial transaction monitoring systems may identify tens of thousands of potentially fraudulent financial transactions per month. Each of these potentially fraudulent financial transactions must be verified 106A, 106B at the respective bank. In prior art methods, the verification of potentially fraudulent transactions is performed manually using customer data held by the respective financial institution and by contacting the bank's client (e.g. the sender or recipient of the transaction). The final outcome of the manual verification 106A, 106B is then used to generate 108A, 108B suspicious activity reports (SARs), which are then filed with the financial regulator or appropriate enforcement agency.

Given the large number of financial transactions that require manual verification and the lack of synergies between the financial institutions, prior art methods make the identification of false positives slow and requires multiple interactions with the clients. This also causes delays in detection of true positive (e.g. fraudulent) transactions. It is additionally challenging for prior art methods to keep pace with the increasing amount of digital services, such as cryptocurrencies. Further, the prior art methods are both costly in terms of labor and infrastructure required at each financial institution.

Accordingly, there is a need in the art for a cost-effective technique of verifying financial transactions that enables timely detection of potentially fraudulent transactions as well as a reduction in Investigations due to false positive alerts. It is therefore desirable to provide a system and method for the verification of financial transactions that overcome the above disadvantages of the prior art.
US 2017/091773 A1 describes a payment processing system including a server that processes a request for a transaction between a customer and a merchant. Separate servers in the payment system continually process a first and a second series of transaction requests. A transaction request is received at the first server. Alternatively, a transaction request is received at the second server. Information regarding the current transaction is compared with historical transaction information stored in the distributed cache. The historical transaction information is accessible to the first server at the first server's locale, and is accessible to the second server at the second server's locale. The comparison and analysis will determine whether or not the most recently received transaction has triggered one of the fraud monitoring rules in the system.
US 2015/081549 A1 relates to processing a real-time money transfer with a screening payment network. The screening payment network includes a screening module that receives the money transfer data and determines a sanction score indicative of the likelihood that the payor is on a sanctioned entity list, is engaged in money laundering activity, and/or is otherwise prohibited from performing money transfer transactions. The screening payment network screens the sender and inserts the sanction score and the money transfer data into an authorization request, and transmits the authorization request to the receiving institution. The receiving institution analyzes the authorization request including the sanction score, and transmits an authorization message indicating one of an authorization confirmation and an authorization denial to the screening payment network based at least in part on the sanction score.
US 2016/132886 A1 discloses a fraud detection system comprising datacenters housing one or more fraud detection servers. The fraud detection servers may be connected to a plurality of banking systems and receives data from the banking systems. After fraud detection servers receive data from banking systems, the data may be normalized into transaction data. A fraud detection server may organize the transaction data into transaction objects, where each transaction object stores data describing an individual financial transaction.
US 2012/109802 A1 provides for identity verification. A system for aggregating and integrating risk-related data includes a comprehensive centralized risk database, which is configured to collect or otherwise receive data across multiple financial products and multiple channels from multiple financial institutions for the purpose of managing risk related to credit, fraud and the like.
US 2007/250441 A1 discloses an Internet payment service provider (IPSP) module that operates between the merchant and the acquiring bank to provide payment related services to the merchants and interface between the merchants and an acquiring bank over the network. The IPSP module is configured to execute a fraud prevention sub-module. The fraud prevention sub-module performs various steps, referred to as "fraud filters", to detect potentially fraudulent transaction activity and may be configured to block or flag a transaction depending on the result of a particular fraud filter or a combination of results from a group of fraud filters.
WO 2008/061132 A2 describes a transaction vetting service. A transaction vetting service (TVS) is coupled with financial institutions (FI) and users through a network and a PSTN network. The TVS can be configured to apply a vetting process for a transaction requested by either a FI or a user. The TVS can apply a set of rules to the requested transaction to determine whether the requested transaction complies with any governing jurisdictions regulatory and legal requirements.

It is the object of the present invention to provide a more accurate and efficient method and system for verifying financial transactions.

This object is solved by the subject matter of the independent claims.

Embodiments are defined by the dependent claims.

### SUMMARY

In one embodiment of the present disclosure, a method for verifying financial transactions comprises sending, by a verification tool, a trigger notification to each of a first and a second financial Institution, wherein the trigger notification triggers, at each of the first and the second financial institutions, an automated verification of a first financial transaction involving the first and the second financial institutions, receiving, by the verification tool, a verification notification from each of the first and the second financial institutions, wherein the verification notification indicates, based on the automated verification, whether the first financial transaction is a verified transaction or an unverified transaction; comparing, at the verification tool, the verification notifications received from each of the first and the second financial institutions to determine whether the first financial transaction is a verified transaction or an unverified transaction; and sending, by the verification tool, an outcome notification to each of the first and the second financial institutions, wherein the outcome notification indicates, based on the comparing, whether the first financial transaction is a verified transaction or an unverified transaction.

Accordingly, the present invention enables verification of the entire transaction chain resulting in faster response times, the reduction in false positive alerts and reduction in costs. A further advantage of the verification tool is that it enables the different financial institutions involved in a financial transaction to collaborate in identifying fraudulent transactions without revealing confidential data to third parties.

According to an aspect, the method further comprises sending, by the verification tool, a request for transaction metadata associated with the first financial transaction to each of the first and the second financial institutions; and in response to the request for transaction metadata, receiving, by the verification tool, non-client identifying transaction metadata associated with a sender of the first financial transaction from the first financial institution and non-client identifying transaction metadata associated with a recipient of the first financial transaction from the second financial institution. According to another aspect, the method further comprises if, based on the determination at the verification tool, the first financial transaction is an unverified transaction, providing the received non-client identifying transaction metadata associated with the sender to the second financial institution and the received non-client identifying transaction metadata associated with the recipient to the first financial institution; and performing, by each of the first and the second financial institutions, an automated or manual verification of the first financial transaction using the received non-client identifying transaction metadata.

The present invention therefore enables a faster response and faster generation of SARs by significantly reducing the number of financial transactions that require manual verification.

According to an aspect, the method further comprises receiving, by the verification tool, a first alert notification from the first financial institution, wherein the first alert notification is associated with the first financial transaction, and wherein the trigger notification is sent to each of the first and the second financial institutions in response to the first alert notification.

According to an aspect, the method further comprises, in response to receiving the first alert notification from the first financial institution, sending, by the verification tool, a second alert notification to the second financial institution.

According to an aspect, the method further comprises receiving, by the verification tool, a plurality of alert notifications from a plurality of financial institutions, wherein each alert notification is associated with a financial transaction involving at least two financial institutions, and wherein each alert notification includes one or more transaction monitoring rules applied to the respective financial transaction at the respective financial institution; training a classifier using outcome notifications and at least one of alert notifications and non-client identifying transaction metadata associated with each of the plurality of financial transactions; and applying the trained classifier to a third alert notification associated with a second financial transaction to determine whether the second financial transaction is a verified or an unverified transaction.

According to an aspect, the method comprises receiving, by the verification tool, first financial transaction data associated with the first financial transaction from the first financial institution, wherein the trigger notification is sent to each of the first and the second financial institutions in response to receiving the first financial transaction data. According to another aspect, the method may further comprise receiving, by the verification tool, financial transaction data from a plurality of financial institutions; training a classifier using outcome notifications and at least one of the financial transaction data and non-client identifying transaction metadata associated with each of the plurality of financial transactions; and applying the trained classifier to second financial transaction data associated with a second financial transaction to determine whether the second financial transaction is a verified or an unverified transaction.

By implementing machine learning techniques, the present invention enables improved response times and faster generation of SARs, as well as enabling a reduction of hardware costs at the financial institutions.

In an embodiment of the present disclosure, a verification tool for verifying financial transactions comprises one or more processors and a memory having computer-executable instructions stored thereon, which, when executed by the one or more processors, perform the steps of: sending a trigger notification to each of a first and a second financial institution, wherein the trigger notification triggers, at each of the first and the second financial institutions, an automated verification of a first financial transaction involving the first and the second financial institutions; receive a verification notification from each of the first and the second financial institutions, wherein the verification notification indicates, based on the automated verification, whether the first financial transaction is a verified transaction or an unverified transaction; comparing the verification notifications received from each of the first and the second financial institutions to determine whether the first financial transaction is a verified transaction or an unverified transaction; sending an outcome notification to each of the first and the second financial institutions, wherein the outcome notification indicates, based on the comparing, whether the first financial transaction is a verified transaction or an unverified transaction.

In an embodiment of the present disclosure, a system comprising the verification tool further comprises a first metadata component of the first financial institution and a second metadata component of the second financial institution, wherein the metadata components are configured to, in response to a request for transaction metadata associated with the first financial transaction, send, to the verification tool, non-client identifying transaction metadata associated with a sender of the first financial transaction from the first financial institution and non-client identifying transaction metadata associated with a recipient of the first financial transaction from the second financial institution. The computer-executable instructions further comprise instructions, which, when executed by the one or more processors perform, at the verification tool, the step of: providing the received non-client identifying transaction metadata associated with the sender to the second financial institution and the received non-client identifying transaction metadata associated with the recipient to the first financial institution if, based on the determination at the verification tool, the first financial transaction is an unverified transaction.

According to an aspect, the metadata components are further configured to encrypt know-your-customer, KYC, information and/or transaction history information and generate non-customer identifying transaction metadata based on the encrypted information.

According to an aspect the system further comprises, at each of the first and the second financial institutions, an alert plug-in configured to: monitor financial transactions; and send an alert notification to the verification tool when a financial transaction is determined to be an unverified transaction based on one or more transaction monitoring rules, wherein the alert notification includes the one or more transaction monitoring rules. According to another aspect, the computer-executable instructions further comprise instructions, which, when executed by the one or more processors perform, at the verification tool, the step of: in response to receiving the first alert notification from the first financial institution, send a second alert notification to the second financial institution.

According to an aspect, the computer-executable instructions further comprise instructions, which, when executed by the one or more processors perform, at the verification tool, the step of: receiving a plurality of alert notifications from a plurality of financial institutions, wherein each alert notification is associated with a financial transaction involving at least two financial institutions. The verification tool further comprises a classifier, wherein the classifier is trained using outcome notifications and at least one of alert notifications and transaction metadata associated with each of the plurality of financial transactions, and wherein the classifier is configured to be applied to a third alert notification associated with a second financial transaction to determine whether the second financial transaction is a verified or an unverified transaction.

According to an aspect, the computer-executable instructions further comprise instructions, which, when executed by the one or more processors perform, at the verification tool, the step of: receiving financial transaction data from a plurality of financial institutions. The verification tool further comprises a classifier, wherein the classifier is trained using outcome notifications and at least one of the financial transaction data and non-client identifying transaction metadata associated with each of the plurality of financial transactions, and wherein the trained classifier is configured to be applied to second financial transaction data associated with a second financial transaction to determine whether the second financial transaction is a verified or an unverified transaction.

According to an aspect, the verification tool is one of: a central verification tool, a distributed verification tool comprising one or more local verification tools, and a distributed verification tool comprising a central verification tool and one or more local verification tools.

On the one hand, when the verification tool is a central verification tool, this provides the advantage that the central verification tool is able to act as a trusted central party that establishes trust between independent parties (the financial institutions). On the other hand, when the central verification tool is a distributed verification tool, costs and inefficiencies can be further reduced and security is improved because there is no longer a single point of attack.

### BRIEF DESCRIPTION OF THE DRAWINGS

Various exemplary embodiments of the subject matter disclosed herein are illustrated in the accompanying drawings in which like reference numerals represent like parts throughout, in which:
FIG. 1 illustrates a process flow diagram for a prior art method of verifying financial transactions.
FIG. 2 illustrates a process flow diagram for a method of verifying financial transactions in accordance with an embodiment.
FIG. 3 illustrates a block diagram of a system for verifying financial transactions in accordance with an embodiment.
FIG. 4 illustrates a process flow diagram for a method of verifying financial transactions in accordance with a further embodiment.
FIG. 5 illustrates a process flow diagram for a method of verifying financial transactions in accordance with a further embodiment.

### DETAILED DESCRIPTION

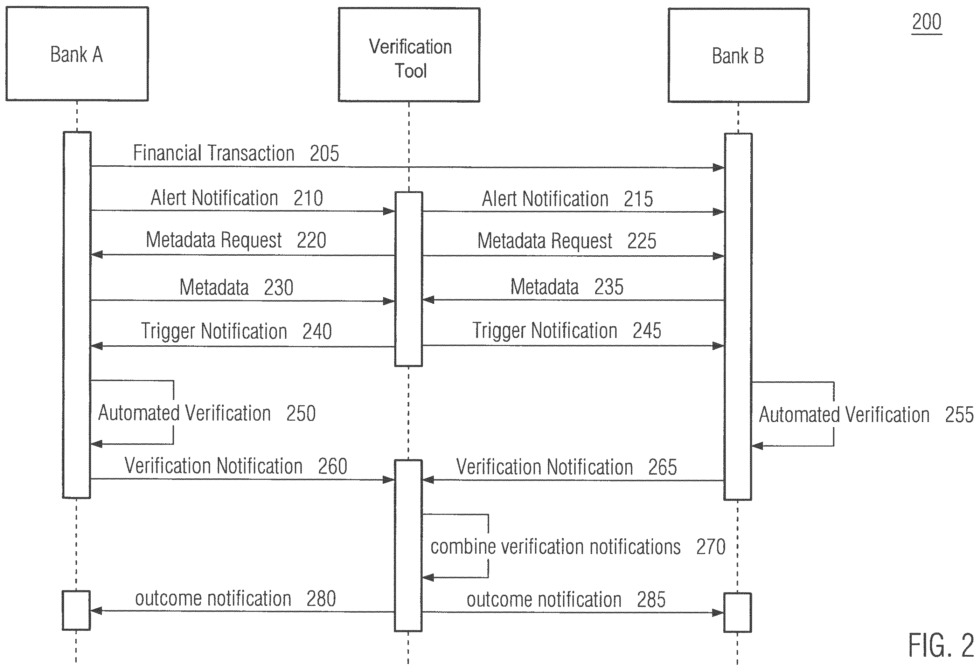

Figure 2 illustrates an exemplary method of verifying a financial transaction in accordance with an embodiment. A financial transaction 205 is initiated between a financial institution A (for example, Bank A) and a financial institution B (for example, Bank B). As an example, client X of Bank A may initiate a payment to client Y of Bank B. The financial transaction 205 may, however, involve more than two financial institutions. For example, Bank A and Bank B may be linked by a clearing house so that a financial transaction 205 between Banks A and B involves three financial institutions. Alternatively, Bank A and Bank B may have only indirect links via a payment system and one or more correspondent banks so that a financial transaction between Banks A and B involves multiple financial institutions.

In some embodiments, the financial institutions monitor financial transactions 205 using transaction monitoring systems. The financial institutions may use financial crime surveillance methods such as AML (anti-money laundering) monitoring systems. The financial institutions apply one or more transaction monitoring rules to the financial transactions 205 to determine if the financial transactions 205 are verified or unverified transactions. A verified transaction is a transaction that has been validated by the transaction monitoring system. An unverified transaction is a suspicious, potentially fraudulent transaction. For example, Both Bank A and Bank B will monitor financial transactions 205 at the respective bank using, for example, historical customer transaction information and customer profiles (know-your-customer information) and by applying internal transaction monitoring rules to the financial transactions 205. If the transaction monitoring system determines that a financial transaction 205 is an unverified transaction, an alert is triggered.

The monitoring system at Bank A may deem the payment initiated by client X at Bank A to client Y at Bank B to be an unverified transaction. This triggers an alert at Bank A. Bank A sends an alert notification 210 to the verification tool. The alert notification 210 informs the verification tool that Bank A deems the financial transaction 205 to be an unverified transaction. In some embodiments, the alert notification 210 will include the one or more transaction monitoring rules that triggered the alert notification 210. The alert notification may additionally include a rule frequency (e.g. annual, quarterly, monthly or weekly). In other embodiments Bank A will send the one or more transaction monitoring rules, and optional rule frequency, to the verification tool independent of the alert notification 210.

In an embodiment, because Bank B may not be aware that the financial transaction 205 is a potentially suspicious or fraudulent transaction, upon receipt of alert notification 210, the verification tool may send an alert notification 215 to Bank B as a "heads up" of the alert triggered at Bank A. The alert notification 215 enables Bank B to perform the necessary measures that would have been taken had an alert been triggered by the transaction monitoring system at Bank B.

In an embodiment, the verification tool sends a trigger notification 240, 245 to each of the first and the second financial institutions. For example, the verification tool sends trigger notification 240 to Bank A and trigger notification 245 to Bank B. The trigger notifications 240, 245 trigger an automated verification 250 of the financial transaction 205 at each of the financial institutions, Bank A and Bank B. The automated verification 250, 255 determines whether the financial transaction is a verified or an unverified transaction.

In one embodiment, the verification tool sends the trigger notifications 240, 245 in response to receiving the alert notification 210 from Bank A. In other embodiments, the verification tool does not receive alert notifications 210, 215 from the financial institutions. In such embodiments, the verification tool receives the financial transaction 205 from Bank A. The financial transaction 205 may be sent from Bank A to Bank B via the verification tool. Alternatively, Bank A may send financial transaction data associated with the financial transaction 205 to the verification tool as a transaction notification. The financial transaction 205 will include transaction data including sender account number, sender bank BIC, booking date, amount, beneficiary bank BIC, beneficiary account number and, optionally, one or more of reference number, beneficiary name and address and comments. In such embodiments, the verification tool sends the trigger notifications 240, 245 in response to receiving the financial transaction data from Bank A.

The automated verification may be performed using any suitable method. During automated verification, the financial institutions (Banks A and B) will internally perform a plausibility analysis using transaction history data (i.e. data relating to transactions over a certain period of time) and know-your-customer (KYC) data. Each financial institution may use its own internal methodology to perform the automated verification. The automated verification may be performed using distributed ledger (DLT) technology, for example, using hardware encrypted verification using IntelSGX or using a zero knowledge proof. The automated verification may be a statistical analysis verification without using client data to identify non-outliers.

The verification tool may send a request for transaction metadata 220, 225 to each of Bank A and Bank B. As discussed above, due to regulations in the financial markets and for competition reasons, financial institutions such as banks cannot share client data and client transaction data with third parties. The central utility and the financial institutions will therefore agree beforehand which transaction metadata is to be requested by the verification tool (and thus shared between the financial institutions and the central utility) and a methodology for masking or encrypting the transaction metadata such that the transaction metadata is non-client identifying (non-CID) metadata.

Any suitable method for data masking or encrypting can be used by the metadata engine 340A, 340B to generate the non-CID metadata, providing that the data is, on the one hand, protected and, on the other hand, remains usable for transaction verification. An example of non-CID metadata is shown in Tables 1 and 2 below. It should be noted that the attributes shown in the first row of Tables 1 and 2 are just examples of attributes that could be leveraged in encrypted or combined format. Any suitable attributes and combination thereof may be used to generate non-CID metadata. Further, although Tables 1 and 2 illustrate five non-CID metadata fields, this is exemplary and any number of one or more fields may be used. The metadata engine 340A at Bank A responds to the request for transaction metadata by sending non-customer identifying transaction metadata associated with the sender (client X) to the verification tool and the metadata engine 340B at Bank B responds to the request for transaction metadata 225 by sending non-customer identifying transaction metadata 235 associated with the recipient (client Y) to the verification tool.

**TABLE 1**

| **Exemplary Sender Transaction Metadata** | | | | |
|---|---|---|---|---|
| Is the account with a sole account holder? | Is the account flagged at an elevated risk? | Can the relationship be considered as an "Existing" client of the bank? | Can the client be considered as a "transacting" client? | Is the account the sole account for the client? |
| Type: Boolean | Type: Boolean | Type: Boolean | Type: Boolean | Type: Boolean |
| Yes/No | Yes/No | Yes/No | Yes/No | Yes/No |

**TABLE 2**

| **Exemplary Recipient Transaction Metadata** | | | | |
|---|---|---|---|---|
| Is the account with a sole account holder? | Is the account flagged at an elevated risk? | Can the relationship be considered as an "Existing" client of the bank? | Can the client be considered as a "transacting" client? | Does the recipient receive "invoiced" payments? |
| Type: Boolean | Type: Boolean | Type: Boolean | Type: Boolean | Type: Boolean |
| Yes/No | Yes/No | Yes/No | Yes/No | Yes/No |

As shown in Tables 1 and 2, the non-CID metadata comprises a plurality of fields relating to a transaction history information or KYC information. Each field is of the Boolean data type meaning that no transaction history information or KYC information is revealed by a financial institution sending the transaction metadata to a third party, such as the verification tool or another financial institution. The verification tool and/or other financial institution cannot piece together or interpret the transaction metadata because the transaction metadata comprises a plurality of fields containing a Boolean response. However, because each field is predetermined according to an agreed methodology, the transaction metadata remains meaningful and can be used by the verification tool and/or the financial institutions. For example, the verification tool may determine whether or not to send trigger notifications based upon analysis of the received transaction metadata, as will be discussed in more detail below. The financial institutions may perform an automated or manual verification using the received non-CID transaction metadata.

Bank A responds to the request for transaction metadata 220 by sending non-CID transaction metadata 230 associated with the sender (client X) to the verification tool and Bank B responds to the request for transaction metadata 225 by sending non-customer identifying transaction metadata 235 associated with the recipient (client Y) to the verification tool.

In some embodiments, as illustrated in Figure 2, the request for transaction metadata 220, 225 may be sent by the verification tool in response to receiving the alert notification 210 from Bank A, and before sending trigger notifications 240, 245. The verification tool then sends trigger notifications 240, 245 in response to receiving the non-CID transaction metadata 230, 235 from the financial institutions. The verification tool may determine whether or not to send trigger notifications 240, 245 based upon analysis of the received transaction metadata 230, 235. Alternatively, the request for transaction metadata 220, 225 may be sent by the verification tool at the same time as or after the trigger notification 340, 345 is sent to the financial institutions. Alternatively, the request for transaction metadata 220, 225 may be sent by the verification tool after receiving the verification notification 260, 265 from the financial institutions.

The financial institutions provide the result of the automated verification to the verification tool. In an embodiment, the verification tool receives a verification notification 260, 265 from each of the first and the second financial institutions. The verification notifications 260, 265 indicate whether the respective financial institution has determined the financial transaction 205 to be a verified or unverified transaction. In some embodiments, the verification notification 260, 265 includes one or more reasons for the indication of whether the financial transaction 205 is determined to be a verified or an unverified transaction.

For example, Bank A sends verification notification 260 to the verification tool and Bank B sends verification notification 265 to the verification tool. The verification tool combines the information provided by the financial institutions to determine whether the financial transaction is a verified or an unverified transaction.

In an embodiment, the verification tool compares 270 the verification notifications 260, 265 received from each of Bank A and Bank B to determine whether the financial transaction 205 is a verified transaction or an unverified transaction in accordance with Table 3. Based on the comparing, the verification tool generates outcome notifications 280, 285 indicating whether the financial transaction 205 is a verified or an unverified transaction.

**TABLE 3**

| **Verification Notification Bank A** | **Verification Notification Bank B** | **Outcome Notification Verification tool** |
|---|---|---|
| Verified Transaction | Verified Transaction | Verified Transaction |
| Verified Transaction | Unverified Transaction | Unverified Transaction |
| Unverified Transaction | Verified Transaction | Unverified Transaction |
| Unverified Transaction | Unverified Transaction | Unverified Transaction |

In an embodiment the verification tool sends an outcome notification 280, 285 to each of the first and the second financial institutions. The outcome notification indicates, based on the comparing, whether the first financial transaction is a verified transaction or an unverified transaction according to the verification tool.

For example, if both of the verification notifications 260, 265 indicate that the financial transaction 205 is a verified transaction, such as in the first line of the Table 3, the verification tool may send outcome notifications 280, 285 indicating that the financial transaction 205 is a verified transaction. The verification tool will then close the alert and delete any transaction metadata 230, 235 associated with the financial transaction 205. However, if one of the verification notifications 260, 265 indicate that the financial transaction 205 is an unverified transaction, such as in the second to fourth lines of the Table 3, the verification tool may send an outcome notification indicating that the financial transaction 205 is an unverified transaction.

In an embodiment, if the verification tool determines that the financial transaction 205 is an unverified transaction, the verification tool provides the received non-CID transaction metadata 330, 335 to the financial institutions. For example, the verification tool will provide the non-CID metadata 330 received from Bank A to Bank B and the verification tool will provide the non-CID metadata 335 received from Bank B to Bank A. The non-CID transactional metadata may be included in the outcome notifications 280, 285. However, the verification notifications are compared at the verification tool only and the verification notifications 360, 365 are not shared between the financial institutions so that Bank A has no knowledge of the outcome of the automated verification at Bank B and vice versa.

As an example, Company M, a client of Bank A, may initiate a payment of 15,000 CHF to three accounts belonging to natural persons M1, M2 and M3 who are clients of Bank B. This financial transaction may trigger an alert at Bank A. During an automated verification performed in response to receiving a trigger notification, Bank A may determine using KYC and historical transaction information that Company M is transferring this amount as a pension fund payment to employees. As a result of the automated verification, Bank A determines that the financial transaction is a verified transaction. In response to receiving a trigger notification from the verification tool, Bank B executes an automated verification of the payment. Bank B may determine, based on KYC data that clients M1, M2 and M3 are natural persons all working for company M and that the reason for receiving this amount is as a payment from company M. As a result of the automated verification, Bank B determines that the financial transaction is a verified transaction. Because both the verification notifications received from Banks A and B indicate that the financial transaction is a verified transaction, the verification tool indicates in the outcome notifications to Banks A and B that the financial transaction is a verified transaction.

As another example, Company L, a client of Bank A, may initiate a payment of 50,000 CHF to an account belonging to Mr. Z, a client of Bank B. This financial transaction may trigger an alert at Bank A. During the automated verification, Bank A may determine using KYC and historical transaction information that Mr. Z owns Company L and that the amount is being transferred as a mortgage payment. As a result of the automated verification, Bank A determines that the financial transaction is a verified transaction. Bank A may provide the relation of Mr. Z to Company L as the reason for the transaction being deemed a verified transaction to the verification tool. As a result of the automated verification at Bank B, Bank B may determine, based on historical transaction data that the amount is being received as a mortgage payment from Company L. However, based on KYC information, Bank B may determine that the mortgage has been contracted by Mr. Z. Bank B may be unaware of the relation of Mr. Z to company L. As a result of the automated verification, Bank B determines that the financial transaction is an unverified transaction. Bank B may provide the information that the mortgage is contracted by Mr. Z and not company L as the reason for the transaction being deemed an unverified transaction to the verification tool. Because one of the verification notifications received from Banks A and B indicate that the financial transaction is an unverified transaction, the verification tool indicates in the outcome notifications to Banks A and B that the financial transaction is an unverified transaction.

In response to receiving an outcome notification 280, 285 indicating that the financial transaction 205 is an unverified transaction, the financial institutions may re-evaluate the automated verification 250, 255. In an embodiment, the financial institutions may perform an automated or manual review of the financial transaction 205, wherein according to an embodiment using non-CID transaction metadata received from the verification tool. As a result of the automated or manual review, the financial institutions may take further action such as generation of a suspicious activity report (SAR) which may be shared upon request of the regulator.

In some examples, the financial institutions will each send the final result of the automated or manual review to the verification tool for optional further analysis. The verification tool may combine the final results for follow-up actions such as notification of the regulator in case the alert remains unverified.

Figure 2 illustrates two financial institutions (Bank A and Bank B) communicating with the verification tool. However, this is exemplary and the verification tool may communicate with any number of financial institutions, each of which performs transaction monitoring.

Accordingly, in an embodiment, the verification tool receives a plurality of alert notifications from a plurality of financial institutions. Each alert notification is associated with a financial transaction involving at least two financial institutions. In another embodiment, the verification tool receives financial transaction data from a plurality of financial institutions. The plurality of alert notifications or financial transaction data are processed according to the method described above and illustrated in Figure 2.

The present invention, by processing financial transaction data at a verification tool, enables verification of the entire financial transaction chain without the sharing of confidential transaction information between the financial institutions. The present invention enables all financial institutions associated with a potentially fraudulent transaction to provide non-CID information to the verification tool, thereby reducing the number of false positives and increasing the response time to unverified financial transactions. Further, the number of financial transactions that require manual verification is significantly reduced, thereby reducing both hardware and labor costs at the financial institutions.

The verification tool may additionally apply data analytics techniques to the alert notifications, financial transaction data, non-CID metadata and/or verification notifications in order to identify patterns and behaviors associated with the financial transactions. Accordingly, data analytics techniques may be applied to the information received by the verification tool at any point during the financial transaction verification method.

Data analytics techniques may be used to determine whether a given financial transaction is a verified or an unverified transaction based on the financial transaction itself or based on the transaction monitoring rules included in the alert notification. Data analytics techniques may additionally or alternatively be used to prioritize financial transactions that require verification. Specifically, the verification tool may rank alert notifications in order of priority for manual verification and include an indication of this ranking in the outcome notification.

Data analytics techniques may additionally or alternatively be used to learn over time which financial monitoring rules are the most accurate in identifying unverified transactions. The verification tool may then provide this information to the respective financial institutions to improve the financial transaction monitoring process. Data analytics techniques may additionally or alternatively be used to identify patterns and/or behaviors associated with a specific client, account or financial institution over time. The resulting information may then be provided to the respective financial institution and/or the financial regulator.

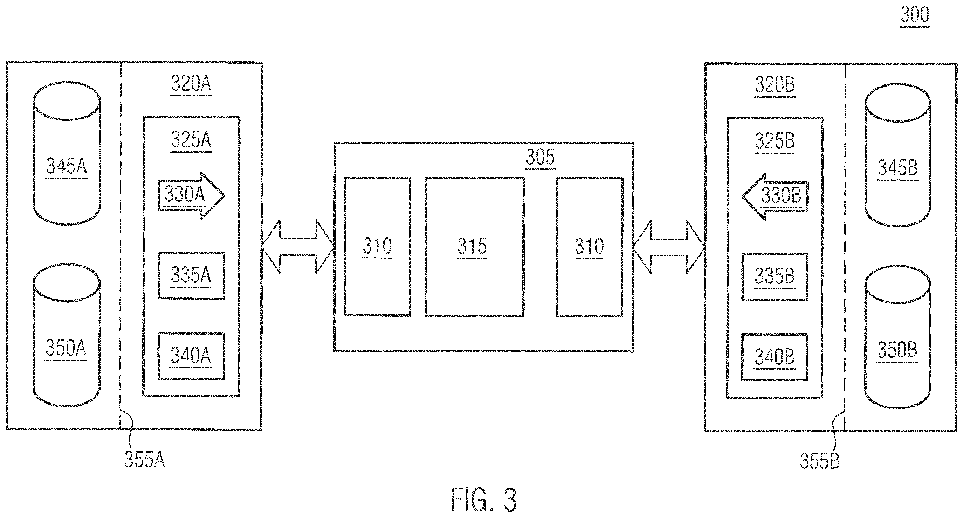

Any suitable technique for the automated recognition of patterns and regularities in the data may be used. One suitable technique is machine learning, which will be described in more detail in relation to Figure 3.

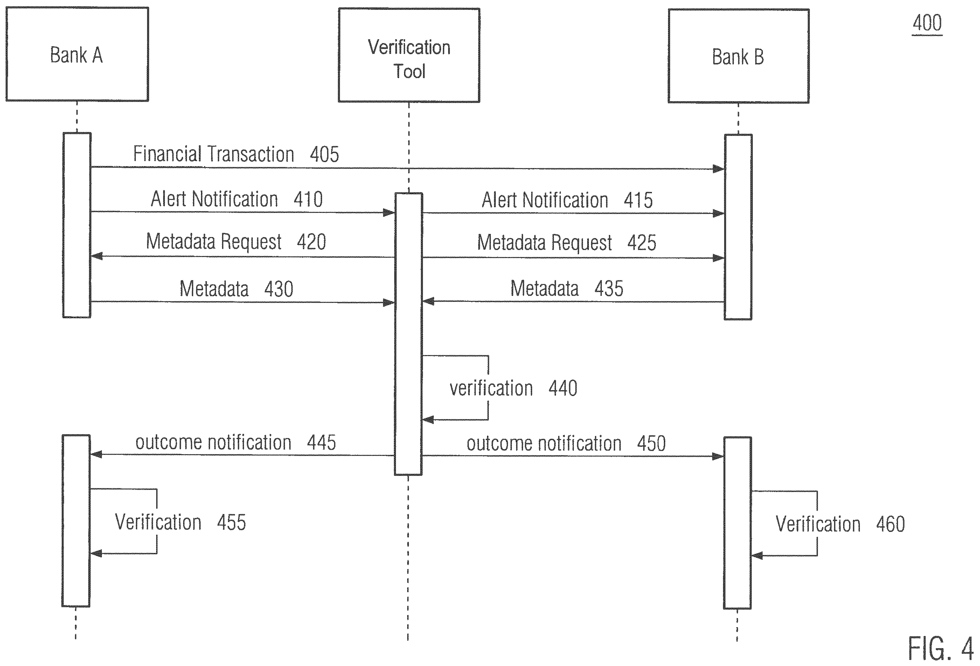

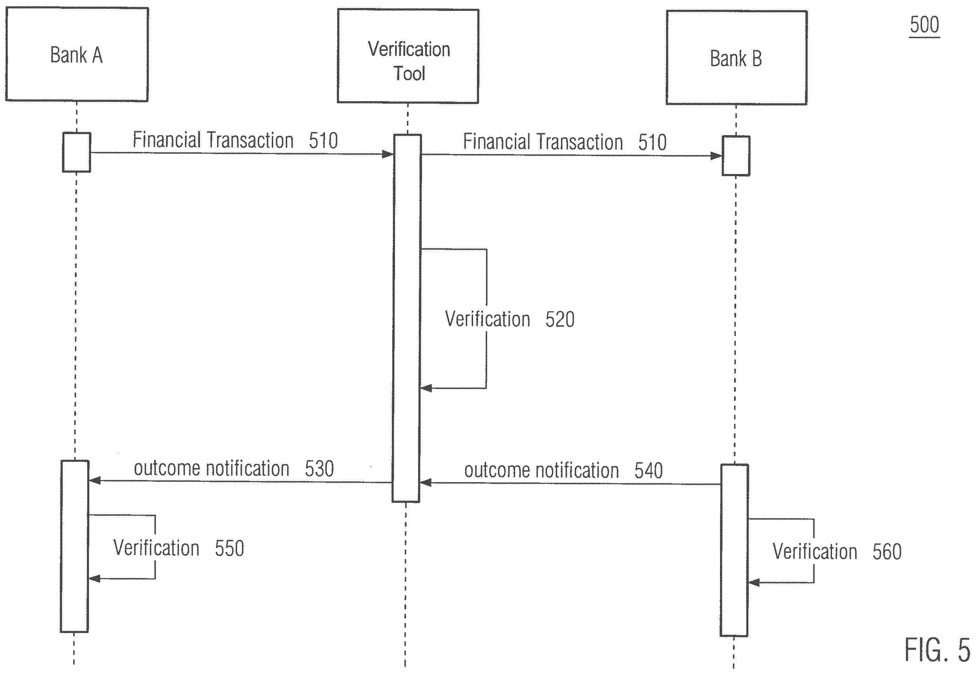

Figure 3 illustrates a schematic view of the system 300 for verifying financial transactions. The system 300 illustrated in Figure 3 is configured to implement the method 200 described above in relation to Figure 2 as well as the methods 300 and 400 described below in relation to Figures 4 and 5. The system comprises a verification tool 305, a first financial institution 320A (e.g. Bank A) and a second financial institution 320B (e.g. Bank B). Although the system 300 of Figure 3 illustrates two financial institutions 320A and 320B communicating with the verification tool 305, this is exemplary and the verification tool may communicate with any number of financial institutions and each financial transaction may involve two or more financial institutions.

In an embodiment, the financial institutions 320A, 320B comprise an alert plug-in 330A, 330B, a verification component 335A, 335B and a metadata engine 340A, 340B. The verification tool 305 is communicatively coupled to the financial institutions 320A, 320B by means of an interface module 310. The interface module 310 is configured to communicate with the alert plug-in 330A, 330B, the verification component 335A, 335B and the metadata engine 340A, 340B. The alert plug-in 330A, 330B, the verification component 335A, 335B and the metadata engine 340A, 340B may be included in an automated analytics engine and the interface module 310 may be configured to communicate with the automated analytics engine 325A, 325B.

The financial institutions further comprise a transaction history database 335A, 335B that stores financial transaction data and a know-your-customer (KYC) database 340A, 340B that stores KYC information. No third party (e.g. the verification tool or another financial institution) can communicate with the databases 335A, 335B, 340A, 340B to protect the data stored therein. This is indicated in Figure 3 by the dashed lines 355A and 355B representing a client identification (CID) barrier.

In an embodiment, the alert plug-in 330A, 330B is configured to monitor financial transactions involving the respective financial institution 320A, 320B. As discussed above in relation to Figure 2, the financial institutions 320A, 320B monitor financial transactions using, for example, financial crime surveillance methods such as AML (anti-money laundering) monitoring systems. Both Bank A 320A and Bank B 320B will monitor financial transactions at the respective bank by applying one or more internal transaction monitoring rules to the financial transactions. The alert plug-in 330A, 330B is configured to apply the one or more transaction monitoring rules to determine whether a financial transaction is determined to be a verified or an unverified transaction based on the financial transaction monitoring. The alert plug-in 330A, 330B is further configured to trigger an alert if the financial transaction is deemed to be an unverified transaction. Specifically, in some embodiments, the alert plug-in 330A, 330B is configured to send an alert notification to the verification tool 305 when a financial transaction triggers an alert. In some embodiments, the alert notification may include the one or more financial transaction rules that triggered the alert notification.

In some embodiments, upon receipt of the alert notification, the verification tool 305 may send an alert notification to one or more other financial institutions involved in the financial transaction as a "heads up" of the triggered alert. For example, if Bank A 320A triggered an alert and sent the alert notification to the verification tool 305, the verification tool 305 may send an alert notification to Bank B 320B. The alert notification sent by the verification tool 305 may be received by the automated analytics engine 325B of Bank B 320B.

In one embodiment, in response to receiving the alert notification from one of the financial institutions 320A, 320B, the verification tool 305 may send a trigger notification to each of the financial institutions 320A, 320B. For example, the verification tool 305 sends a trigger notification to Bank A 320A and a trigger notification 320B to Bank B. The trigger notifications trigger an automated verification of the financial transaction at each of the financial institutions, Bank A 320A and Bank B 320B.

In other embodiments, the financial transaction may be sent from Bank A to Bank B via the verification tool. In said embodiments, the verification tool is configured to receive the financial transaction from Bank A. The financial transaction will include transaction data including sender account number, sender bank BIC, booking date, amount, beneficiary bank BIC, beneficiary account number and, optionally, one or more of reference number, beneficiary name and address and comments. In other embodiments, the Bank A may send the financial transaction data associated with the financial transaction to the verification tool as a transaction notification. In said embodiments, the verification tool is configured to send the trigger notifications in response to receiving the financial transaction data from Bank A.

The verification component 335A, 335B is configured to perform the automated verification of the financial transaction to determine whether the financial transaction is a verified or an unverified transaction. The verification component 335A, 335B is configured to generate a verification notification that indicates whether the financial transaction is a verified or an unverified transaction. The verification notification may additionally include one or more reasons for the indication of whether the financial transaction is a verified or an unverified transaction. The verification component 335A, 335B is configured to send the verification notification to the verification tool 305.

In some embodiments, the verification tool 305 is configured to send a request for transaction metadata to each of Bank A 320A and Bank B 320B. The metadata engine 340A, 340B is configured to receive the request for transaction metadata and provide the transaction metadata to the verification tool 305. The metadata engine 340A, 340B may obtain transaction history information from the transaction database 345A, 345B and know-your-customer, KYC information, from a KYC database 350A, 350B. Data stored in the databases 345, 350 cannot be shared with third parties. Therefore, the metadata engine 340A, 340B is configured to generate non-customer identifying (non-CID) metadata based on the transaction history information and the KYC information. In an embodiment, the metadata engine 340A, 340B is configured to encrypt or hash the transaction history information and the KYC information and send the encrypted or hashed information to the verification tool 305 as non-CID metadata as discussed in relation to Figure 2 above.

The verification tool 305 further comprises an analytics component 315. The analytics component 315 is configured to apply analytics techniques to the information included in the alert notifications, financial transaction data and/or non-CID metadata in order to identify patterns and behaviors associated with the financial transactions as described above in relation to Figure 2. Accordingly, data analytics techniques may be executed by the verification tool at any point during the financial transaction verification method.

Any suitable technique for the automated recognition of patterns and regularities in the data may be used. One suitable technique is machine learning. Machine learning can be supervised or unsupervised.

In supervised machine learning, a supervised machine learning algorithm analyzes training data consisting of training examples to produce an inferred function. Each training example is a pair consisting of an input and a corresponding known output, where the input is generally referred to as a feature and the corresponding output is generally referred to as a label. In the case where the output is discrete, the inferred function is referred to as a classifier. For any valid input (feature), a classifier should be able to predict the correct output (label). In other words, the classifier should be able to generalize from training examples to unseen data by classifying new features into labels. In contrast, unsupervised machine learning algorithms infer patterns from a dataset without reference to known or labelled outcomes.

In some embodiments, the analytics component 315 is a classifier. The classifier 315 may be trained using a supervised machine-learning algorithm so that an outcome notification corresponding to an input (e.g. alert notification or transaction data) can be obtained by inputting the input notification into the classifier 315.

In an embodiment, the verification tool 305 is configured to receive a plurality of alert notifications from a plurality of financial institutions 320A, 320B. Each alert notification is associated with a financial transaction involving at least two financial institutions. The alert notifications include one or more transaction monitoring rules that triggered the alert notification. In an embodiment, the classifier 315 is trained using training examples comprising the one or more rules included in alert notifications and/or non-CID metadata as input and outcome notifications as output. The classifier 315 therefore learns, for each financial institution, which rules applied by the respective financial institution are the most accurate.

Figure 4 illustrates a method for verifying financial transactions using a classifier when the verification tool is configured to receive alert notifications. The method may be implemented by the system of Figure 3. As described above in relation to Figure 3, the verification tool comprises a classifier. The classifier may be trained using the information obtained from the financial institutions during operation of the verification tool in accordance with the method of Figure 2. In an embodiment, the classifier is trained using at least one of transaction monitoring rules included in alert notifications and non-CID metadata as input and outcome notifications as output. In an embodiment, the trained classifier is applied to alert notifications to determine whether the financial transaction is a verified or an unverified transaction.

The verification tool receives an alert notification 410 from Bank A, the alert notification 410 being associated with a second financial transaction 405 from Bank A 320A to Bank B 320B. The alert notification 410 includes the one or more transaction monitoring rules that triggered the alert at Bank A. In response to receiving the alert notification 410, the verification tool may optionally send an alert notification 415 to Bank B.

After receiving the alert notification 410 from Bank A, the verification tool may send a request for metadata 420, 425 to each of Bank A and Bank B. Banks A and B provide non-CID metadata to the verification tool using the techniques described above in relation to Figures 2 and 3. Thus, Bank A responds to the request for transaction metadata 420 by sending non-CID transaction metadata 430 associated with the sender (client X) to the verification tool and Bank B responds to the request for transaction metadata 425 by sending non-customer identifying transaction metadata 435 associated with the recipient (client Y) to the verification tool.

In an embodiment, the verification tool performs an automated verification 440 by applying the classifier to the received alert notification 410 and/or transaction metadata 430, 435 to determine whether the financial transaction is a verified or an unverified transaction. The verification tool then sends an outcome notification 445, 450 to each of Bank A and Bank B, the outcome notifications 445, 450 indicating whether the financial transaction is a verified or unverified transaction.

If the verification tool determines that the financial transaction 405 is an unverified transaction, the verification tool will provide the received non-CID transaction metadata 430, 435 to the financial institutions. For example, the verification tool will provide the non-CID metadata 430 received from Bank A to Bank B and the verification tool will provide the non-CID metadata 435 received from Bank B to Bank A. The non-CID transactional metadata may be included in the outcome notifications 445, 450.

In response to receiving an outcome notification 445, 450 indicating that the financial transaction 405 is an unverified transaction, the financial institutions may perform an automated or manual verification 455, 460 of the financial transaction 405.

Referring back to Figure 3, in another embodiment, the verification tool 305 does not receive alert notifications from the financial institutions 320A, 320B. The verification tool 305 is configured to receive financial transaction data from a plurality of financial institutions 320A, 320B. The financial transaction includes financial transaction data such as sender account number, sender bank BIC, booking date, amount, execution date, beneficiary account number, beneficiary bank BIC, beneficiary bank address, and optionally one or more of reference number for payment slip, beneficiary name and address and comments. In one example, Bank A 320A sends a financial transaction comprising the financial transaction data to Bank B 320B via the verification tool 305. In another example, Bank A 320A sends a financial transaction to Bank B 320B and Bank A 320A sends the transaction data included in the financial transaction to the verification tool 305 as a transaction notification. In an embodiment, the classifier 315 is trained using training examples comprising the financial transaction data and/or non-CID metadata as input and outcome notifications as output.

Figure 5 illustrates a method for verifying financial transactions using a classifier when the verification tool is configured to receive financial transaction data. The method may be implemented by the system of Figure 3. As described above in relation to Figure 3, the verification tool comprises a classifier. The classifier may be trained using the information obtained from the financial institutions during operation of the verification tool in accordance with the method of Figure 2. In an embodiment, the classifier is trained using at least one of financial transaction data and non-CID metadata as input and outcome notifications as output. In an embodiment, the trained classifier is applied to financial transaction data to determine whether the financial transaction is a verified or an unverified transaction.

As illustrated in Figure 5, a financial transaction 510 is sent from Bank A to Bank B via the verification tool. The verification tool receives the financial transaction 510 including the financial transaction data from Bank A. The verification tool may then optionally request metadata associated with the financial transaction 510 from Banks A and B (not shown).

The verification tool performs an automated verification 520 of the financial transaction 510 by applying the trained classifier to the financial transaction data 510 to determine whether the financial transaction is a verified or an unverified transaction. If the verification tool has received non-CID metadata from the financial institutions, the verification tool may apply the trained classifier to the financial transaction data 510 and the non-CID metadata. The verification tool then sends an outcome notification 530, 540 to each of Banks A and B, wherein the outcome notifications 530, 540 indicate whether the financial transaction 510 is a verified or an unverified transaction.

In response to receiving an outcome notification 530, 540 indicating that the financial transaction 510 is an unverified transaction, the financial institutions may each perform an automated or manual verification 550, 560 of the financial transaction 510. As a result of the automated or manual review, the financial institutions may take further action such as generation of a suspicious activity report (SAR) which may be shared upon request of the regulator.

The use of a classifier is one example of the use of machine learning algorithms at the verification tool 305. Unsupervised machine learning algorithms may be used at the verification tool to uncover patterns in the data provided by the financial institutions. For example, anomaly detection could automatically discover unusual data points to identify fraudulent transactions. Unsupervised machine learning algorithms could detect anomalous behavior for a particular account or any significant deviation from that account's normal behavior.

Referring to Figures 2, 4 and 5, it can be seen that the use of machine learning enables the amount of data processing steps to be reduced, in particular according to the embodiment of Figures 4 and 5, verification is performed once by the financial institutions. Further, according to the embodiment of Figure 5, no alert notification is required from the financial institutions. Accordingly, response time is further increased and the hardware (processing and storage) costs at the financial institutions are decreased.

Figure 3 illustrates the verification tool 305 as being a component central to the system 300 (i.e. a central verification tool). For example, the verification tool 305 may be implemented on a central server which communicates with each of the financial institutions.

However, in other embodiments, the verification tool 305 can have multiple instances which can be linked together. In such embodiments, any instances of the verification tool may be used in isolation or in a combined hive architecture following the methodology described above. Thus, the methods and system described above in relation to Figures 2 to 5 may be implemented by means of a distributed architecture.

More specifically, in some embodiments, one or more of the financial institutions 320A, 320B may have, or be associated with, one or more local verification tools (not shown). For example, one or more local verification tools may be located within or associated with Bank A 320A and/or one or more local verification tools may be located within or associated with Bank B 320B. In other words, one or more local verification tools may be located within or associated with one and the same financial institution. For example, different departments of the same financial institution may each be associated with a local verification tool. In some embodiments, the plurality of local verification tools located at or associated with the financial institutions 320A, 320B may be linked to a central verification tool.

Therefore, the verification tool 305 may be a distributed verification tool comprising a plurality of local verification tools or the verification tool may be a distributed verification tool comprising a central verification tool and a plurality of local verification tools.

Below is an example of performing, in a distributed system, the method for verifying a financial transaction as described above. The monitoring system at Bank A may deem a payment initiated by client X at Bank A to client Y at Bank B to be an unverified transaction. This triggers an alert at Bank A. Thus, the alert plug-in at Bank A sends an alert notification to local verification tool A located within or associated with Bank A. In response to the alert notification, local verification tool A sends a trigger notification to the verification component at Bank A to trigger an automated verification of the financial transaction. Where the local verification tool A is located at Bank A, the alert notification and trigger notification are sent internally within Bank A. Alternatively, the automated verification may be performed by verification tool A in response to receiving the alert notification.

A local verification tool B may be located at or associated with Bank B. Local verification tool A may send an alert notification and/or a trigger notification to Bank B. In an embodiment, local verification tool A may send an alert notification and/or a trigger notification to local verification tool B. The trigger notification will trigger an automated verification at Bank B. The automated verification may be performed by the verification component at Bank B or by local verification tool B.

As a result of the automated verification at Bank A, a verification notification indicating whether Bank A has determined the financial transaction to be a verified or unverified transaction may be sent to the central verification tool. The verification notification may be sent by the verification component of Bank A or by local verification tool A. As a result of the automated verification at Bank B, a verification notification indicating whether Bank B has determined the financial transaction to be a verified or unverified transaction may be sent to the central verification tool. The verification notification may be sent by the verification component of Bank B or by local verification tool B. The verification notifications are combined by the central verification tool to generate outcome notifications as described above. Alternatively, if the distributed verification tool does not include a central verification tool and the local verification component is not located at Bank A, the verification notifications may be sent to local verification component A. In this case, the verification notifications are combined by local verification tool A to generate outcome notifications as described above.

The system 300 may be implemented by means of a networked computing environment. The invention may also be practiced in distributed system environments where local and remote computer systems, which are linked (either by hardwired data links, wireless data links, or by a combination of hardwired and wireless data links) through a network, both perform tasks. In a distributed system environment, program modules may be located in both local and remote memory storage devices.

The verification tool 305 and financial institutions 320A, 320B may comprise or utilize a special purpose or general-purpose computer having one or more processors and a memory. In an embodiment, the verification tool comprises one or more processors and a memory having computer-executable instructions, which when executed by the one or more processors perform the method as described above. The analytics engine 325A, 325B, alert plug-ins 330A, 330B, metadata components 335A, 335B and verification component 340A, 340B may be implemented in hardware, software, firmware or any combination thereof. For example, said components may be implemented as computer code configured to be executed by one or more processors or said components may be implemented as hardware logic/electrical circuitry.

The methods for verifying transactions and a verification tool for verifying transactions have been described above in relation to the verification of financial transactions and sharing of financial transaction data. The verification tool can therefore be thought of as being a "financial data utility". More specifically, in embodiments where an unverified transaction is a fraudulent or potentially fraudulent transaction, the verification tool may be a "financial crime utility" that enables the secure sharing of financial data and the efficient generation of SARs to detect and prevent financial crime. Nonetheless, the verification tool and methods for verifying financial transactions as described above in relation to Figures 2 to 5 may be used to verify financial transactions or other types of data for purposes other than financial crime.

Embodiments within the scope of the present invention also include physical and other computer-readable media for carrying or storing computer-executable instructions and/or data structures. Such computer-readable media can be any available media that can be accessed by a general purpose or special purpose computer system. Computer-readable media that store computer-executable instructions are computer storage media (devices). Embodiments of the present invention may comprise computer-readable storage media having computer-executable instructions stored thereon that, when executed by the processor, perform the method as described in relation to one of Figures 2, 3 and 5.

Finally, it is to be noted that although individual embodiments have been described in detail above in a simplified explanation, the disclosure is intended to cover all combinations of these embodiments. Specifically, details, elements and specific aspects disclosed with respect to the financial transaction verification methods and financial transaction verification system according to embodiments illustrated in Figures 2 to 5 according to the present disclosure are combinable, where not obviously contradictory or defined as relating to strict alternatives. Further, steps and elements of the methods described in relation to Figures 2, 3 and 5 may be combinable in parallel or sequential execution.

## Claims

1. A computer-implemented method (200) for verifying financial transactions, comprising:
sending, by a verification tool communicatively coupled to each of a first and a second financial institution by means of an interface module (310), a trigger notification (240, 245) to each of the first and the second financial institution, wherein the trigger notification is sent in response to receiving an alert notification (210) from the first financial institution or in response to receiving, from the first financial institution, financial transaction data associated with a first financial transaction (205) initiated between the first and the second financial institution and triggers, at a verification component (335A, 335B) of each of the first and the second financial institutions, an automated verification (250, 255) of the first financial transaction (205) involving the first and the second financial institutions;
receiving, by the verification tool, a verification notification (260, 265) from the verification component of each of the first and the second financial institutions, wherein the verification notification indicates, based on the automated verification, whether the first financial transaction is a verified transaction or an unverified transaction;
comparing (270), at the verification tool, the verification notifications received from the verification component of each of the first and the second financial institutions to determine whether the first financial transaction is a verified transaction or an unverified transaction; and
sending, by the verification tool, an outcome notification (280, 285) to each of the first and the second financial institutions, wherein the outcome notification indicates, based on the comparing, whether the first financial transaction is a verified transaction or an unverified transaction.

2. The computer-implemented method of claim 1, further comprising:
sending, by the verification tool, a request for transaction metadata (220, 225) associated with the first financial transaction to each of the first and the second financial institutions; and
in response to the request for transaction metadata, receiving, by the verification tool, non-client identifying transaction metadata (230) associated with a sender of the first financial transaction from the first financial institution and non-client identifying transaction metadata (235) associated with a recipient of the first financial transaction from the second financial institution.

3. The computer-implemented method of claim 1 or 2, further comprising:
if, based on the determination at the verification tool, the first financial transaction is an unverified transaction, providing the received non-client identifying transaction metadata associated with the sender to the second financial institution and the received non-client identifying transaction metadata associated with the recipient to the first financial institution; and
performing, by each of the first and the second financial institutions, an automated or manual verification of the first financial transaction using the received non-client identifying transaction metadata.

4. The computer-implemented method of one of claims 1 to 3, further comprising:
receiving, by the verification tool, a first alert notification (210) from the first financial institution, wherein the first alert notification is associated with the first financial transaction, and wherein the trigger notification is sent to each of the first and the second financial institutions in response to the first alert notification.

5. The computer-implemented method of claim 4, further comprising:
in response to receiving the first alert notification from the first financial institution, sending, by the verification tool, a second alert notification (215) to the second financial institution.

6. The computer-implemented method of claim 4 or 5, further comprising:
receiving, by the verification tool, a plurality of alert notifications from a plurality of financial institutions, wherein each alert notification is associated with a financial transaction involving at least two financial institutions, and wherein each alert notification includes one or more transaction monitoring rules applied to the respective financial transaction at the respective financial institution;
training a classifier using outcome notifications and at least one of alert notifications and non-client identifying transaction metadata associated with each of the plurality of financial transactions; and
applying the trained classifier to a third alert notification associated with a second financial transaction to determine whether the second financial transaction is a verified or an unverified transaction.

7. The computer-implemented method of one of claims 1 to 3, further comprising:
receiving, by the verification tool, first financial transaction data associated with the first financial transaction from the first financial institution, wherein the trigger notification is sent to each of the first and the second financial institutions in response to receiving the first financial transaction data.

8. The computer-implemented method of claim 7, further comprising:
receiving, by the verification tool, financial transaction data from a plurality of financial institutions;
training a classifier using outcome notifications and at least one of the financial transaction data and non-client identifying transaction metadata associated with each of the plurality of financial transactions; and
applying the trained classifier to second financial transaction data associated with a second financial transaction to determine whether the second financial transaction is a verified or an unverified transaction.

9. A verification tool (305) for verifying financial transactions, comprising:
an interface module (310), wherein the verification tool is communicatively coupled to a first financial institution (320A) and a second financial institution (320B) by means of the interface module;
one or more processors; and
a memory having computer-executable instructions stored thereon, which, when executed by the one or more processors perform the steps of:
sending a trigger notification to each of the first (320A) and the second (320B) financial institution, wherein the trigger notification is sent in response to receiving an alert notification (210) from the first financial institution or in response to receiving, from the first financial institution, financial transaction data associated with a first financial transaction (205) initiated between the first and the second financial institution and triggers, at a verification component (335A, 335B) of each of the first and the second financial institutions, an automated verification of a first financial transaction involving the first and the second financial institutions;
receiving a verification notification from the verification component of each of the first and the second financial institutions, wherein the verification notification indicates, based on the automated verification, whether the first financial transaction is a verified transaction or an unverified transaction;
comparing the verification notifications received from the verification component of each of the first and the second financial institutions to determine whether the first financial transaction is a verified transaction or an unverified transaction;
sending an outcome notification to each of the first and the second financial institutions, wherein the outcome notification indicates, based on the comparing, whether the first financial transaction is a verified transaction or an unverified transaction.

10. A system (300) comprising the verification tool of claim 9, further comprising:
a first metadata component (335A) of the first financial institution and a second metadata component (335B) of the second financial institution,
wherein the metadata components are configured to, in response to a request for transaction metadata associated with the first financial transaction, send, to the verification tool, non-client identifying transaction metadata associated with a sender of the first financial transaction from the first financial institution and non-client identifying transaction metadata associated with a recipient of the first financial transaction from the second financial institution, and
wherein the computer-executable instructions further comprise instructions, which, when executed by the one or more processors perform, at the verification tool, the step of:
providing the received non-client identifying transaction metadata associated with the sender to the second financial institution and the received non-client identifying transaction metadata associated with the recipient to the first financial institution if, based on the determination at the verification tool, the first financial transaction is an unverified transaction.

11. The system of claim 10, wherein the metadata components are further configured to encrypt know-your-customer, KYC, information and/or transaction history information and generate non-customer identifying transaction metadata based on the encrypted information.

12. The system of claim 10 or 11, further comprising, at each of the first and the second financial institutions, an alert plug-in (330A, 330B) configured to:
monitor financial transactions; and
send an alert notification to the verification tool when a financial transaction is determined to be an unverified transaction based on one or more transaction monitoring rules, wherein the alert notification includes the one or more transaction monitoring rules, and
wherein the computer-executable instructions further comprise instructions, which, when executed by the one or more processors perform, at the verification tool, the step of:
in response to receiving the first alert notification from the first financial institution, send a second alert notification to the second financial institution.

13. The system of claim 12, wherein the computer-executable instructions further comprise instructions, which, when executed by the one or more processors perform, at the verification tool, the step of:
receiving a plurality of alert notifications from a plurality of financial institutions, wherein each alert notification is associated with a financial transaction involving at least two financial institutions, and
wherein the verification tool further comprises a classifier (315), wherein the classifier is trained using outcome notifications and at least one of alert notifications and transaction metadata associated with each of the plurality of financial transactions, and
wherein the classifier is configured to be applied to a third alert notification associated with a second financial transaction to determine whether the second financial transaction is a verified or an unverified transaction.

14. The system of claim 10 or 11, wherein the computer-executable instructions further comprise instructions, which, when executed by the one or more processors perform, at the verification tool, the step of:
receiving financial transaction data from a plurality of financial institutions, and
wherein the verification tool further comprises a classifier (315), wherein the classifier is trained using outcome notifications and at least one of the financial transaction data and non-client identifying transaction metadata associated with each of the plurality of financial transactions, and
wherein the trained classifier is configured to be applied to second financial transaction data associated with a second financial transaction to determine whether the second financial transaction is a verified or an unverified transaction.

15. The computer-implemented method of one of claims 1 to 8, the verification tool of claim 9, or the system of one of claims 10 to 14, wherein the verification tool is one of: a central verification tool, a distributed verification tool comprising one or more local verification tools and a distributed verification tool comprising a central verification tool and one or more local verification tools.

## Patentansprüche

1. Ein computerimplementiertes Verfahren (200) zur Verifizierung von Finanztransaktionen, das Folgendes aufweist:
Senden einer Auslösemeldung (240, 245) durch ein Verifizierungswerkzeug, das mittels eines Schnittstellenmoduls (310) mit einem ersten und einem zweiten Finanzinstitut kommunikativ gekoppelt ist, an das erste und das zweite Finanzinstitut, wobei die Auslösemeldung in Reaktion auf den Empfang einer Warnmeldung (210) von dem ersten Finanzinstitut oder in Reaktion auf den Empfang von von dem ersten Finanzinstitut Finanztransaktionsdaten, die mit einer ersten Finanztransaktion (205) verbunden sind, die zwischen dem ersten und dem zweiten Finanzinstitut initiiert wurde, gesendet wird und an einer Verifizierungskomponente (335A, 335B) jedes der ersten und zweiten Finanzinstitute eine automatisierte Verifizierung (250, 255) der ersten Finanztransaktion (205), an der das erste und das zweite Finanzinstitut beteiligt sind, auslöst;
Empfangen einer Verifizierungsmitteilung (260, 265) von der Verifizierungskomponente jedes der ersten und zweiten Finanzinstitute durch das Verifizierungswerkzeug, wobei die Verifizierungsmitteilung auf der Basis der automatisierten Verifizierung anzeigt, ob die erste Finanztransaktion eine verifizierte Transaktion oder eine nicht verifizierte Transaktion ist;
Vergleichen (270) der von der Verifizierungskomponente sowohl des ersten als auch des zweiten Finanzinstituts empfangenen Verifizierungsmitteilungen an dem Verifizierungswerkzeug, um zu bestimmen, ob die erste Finanztransaktion eine verifizierte Transaktion oder eine nicht verifizierte Transaktion ist; und
Senden einer Ergebnismitteilung (280, 285) durch das Verifizierungswerkzeug an jedes der ersten und zweiten Finanzinstitute, wobei die Ergebnismitteilung auf der Grundlage des Vergleichs anzeigt, ob die erste Finanztransaktion eine verifizierte Transaktion oder eine nicht verifizierte Transaktion ist.

2. Das computerimplementierte Verfahren nach Anspruch 1, das ferner aufweist:
Senden einer Anforderung von Transaktions-Metadaten (220, 225), die mit der ersten Finanztransaktion verbunden sind, durch das Verifizierungswerkzeug an jedes der ersten und zweiten Finanzinstitute; und
als Antwort auf die Anforderung von Transaktionsmetadaten, Empfangen von nicht-kundenidentifizierenden Transaktionsmetadaten (230), die einem Absender der ersten Finanztransaktion zugeordnet sind, von dem ersten Finanzinstitut und von nicht-kundenidentifizierenden Transaktionsmetadaten (235), die einem Empfänger der ersten Finanztransaktion zugeordnet sind, von dem zweiten Finanzinstitut durch das Verifikationswerkzeug.

3. Das computerimplementierte Verfahren nach Anspruch 1 oder 2, das ferner aufweist:
wenn auf der Basis der Bestimmungsvorrichtung die erste Finanztransaktion eine nicht verifizierte Transaktion ist, Bereitstellen der empfangenen, den Absender identifizierenden Transaktions-Metadaten, die nicht dem Kunden zugeordnet sind, an das zweite Finanzinstitut und der empfangenen, den Empfänger identifizierenden Transaktions-Metadaten, die nicht dem Kunden zugeordnet sind, an das erste Finanzinstitut; und
Durchführen einer automatisierten oder manuellen Verifizierung der ersten Finanztransaktion unter Verwendung der empfangenen nichtkundenidentifizierenden Transaktions-Metadaten durch das erste und das zweite Finanzinstitut.

4. Das computerimplementierte Verfahren nach einem der Ansprüche 1 bis 3, das ferner aufweist:
Empfangen einer ersten Warnmeldung (210) von dem ersten Finanzinstitut durch das Verifizierungswerkzeug, wobei die erste Warnmeldung mit der ersten Finanztransaktion verknüpft ist, und wobei die Auslösemeldung als Reaktion auf die erste Warnmeldung an jedes der ersten und zweiten Finanzinstitute gesendet wird.

5. Das computerimplementierte Verfahren nach Anspruch 4, das ferner aufweist:
als Reaktion auf den Empfang der ersten Warnmeldung von dem ersten Finanzinstitut, Senden einer zweiten Warnmeldung (215) durch das Verifikationswerkzeug an das zweite Finanzinstitut.

6. Das computerimplementierte Verfahren nach Anspruch 4 oder 5, das ferner Folgendes aufweist:
Empfangen einer Vielzahl von Warnmeldungen von einer Vielzahl von Finanzinstituten durch das Verifikationswerkzeug, wobei jede Warnmeldung mit einer Finanztransaktion verbunden ist, an der mindestens zwei Finanzinstitute beteiligt sind, und wobei jede Warnmeldung eine oder mehrere Transaktionsüberwachungsregeln enthält, die auf die jeweilige Finanztransaktion bei dem jeweiligen Finanzinstitut angewendet werden;
Trainieren eines Klassifizierers unter Verwendung von Ergebnisbenachrichtigungen und mindestens einer von Warnbenachrichtigungen und nichtkundenidentifizierenden Transaktionsmetadaten, die mit jeder der Vielzahl von Finanztransaktionen verbunden sind; und
Anwenden des trainierten Klassifizierers auf eine dritte Warnmeldung, die mit einer zweiten Finanztransaktion verbunden ist, um zu bestimmen, ob die zweite Finanztransaktion eine verifizierte oder eine nicht verifizierte Transaktion ist.

7. Das computerimplementierte Verfahren nach einem der Ansprüche 1 bis 3, das ferner aufweist:
Empfangen von ersten Finanztransaktionsdaten, die mit der ersten Finanztransaktion verbunden sind, von dem ersten Finanzinstitut durch das Verifizierungswerkzeug, wobei die Auslösemeldung als Reaktion auf den Empfang der ersten Finanztransaktionsdaten an jedes der ersten und zweiten Finanzinstitute gesendet wird.

8. Das computerimplementierte Verfahren nach Anspruch 7, das ferner Folgendes aufweist:
Empfangen von Finanztransaktionsdaten von einer Vielzahl von Finanzinstituten durch das Verifikationswerkzeug;
Trainieren eines Klassifizierers unter Verwendung von Ergebnisbenachrichtigungen und mindestens einem der Finanztransaktionsdaten und nichtkundenidentifizierenden Transaktionsmetadaten, die mit jeder der Vielzahl von Finanztransaktionen verbunden sind; und
Anwenden des trainierten Klassifizierers auf zweite Finanztransaktionsdaten, die mit einer zweiten Finanztransaktion verbunden sind, um zu bestimmen, ob die zweite Finanztransaktion eine verifizierte oder eine nicht verifizierte Transaktion ist.

9. Ein Verifikationswerkzeug (305) zum Verifizieren von Finanztransaktionen, aufweisend:
ein Schnittstellenmodul (310), wobei das Verifikationswerkzeug mittels des Schnittstellenmoduls mit einem ersten Finanzinstitut (320A) und einem zweiten Finanzinstitut (320B) kommunikativ gekoppelt ist;
einen oder mehrere Prozessoren; und
einen Speicher, in dem computerausführbare Anweisungen gespeichert sind, die, wenn sie von dem einen oder den mehreren Prozessoren ausgeführt werden, die folgenden Schritte ausführen::
Senden einer Auslösemeldung an das erste (320A) und das zweite (320B) Finanzinstitut, wobei die Auslösemeldung als Reaktion auf den Empfang einer Warnmeldung (210) von dem ersten Finanzinstitut oder als Reaktion auf den Empfang von Finanztransaktionsdaten von dem ersten Finanzinstitut gesendet wird, die mit einer ersten Finanztransaktion (205) verbunden sind, die zwischen dem ersten und dem zweiten Finanzinstitut eingeleitet wurde, und bei einer Verifizierungskomponente (335A, 335B) des ersten und des zweiten Finanzinstituts eine automatische Verifizierung einer ersten Finanztransaktion auslöst, an der das erste und das zweite Finanzinstitut beteiligt sind;
Empfangen einer Verifizierungsmitteilung von der Verifizierungskomponente sowohl des ersten als auch des zweiten Finanzinstituts, wobei die Verifizierungsmitteilung auf der Basis der automatisierten Verifizierung anzeigt, ob die erste Finanztransaktion eine verifizierte Transaktion oder eine nicht verifizierte Transaktion ist;
Vergleichen der von der Verifizierungskomponente jedes der ersten und zweiten Finanzinstitute empfangenen Verifizierungsmitteilungen, um zu bestimmen, ob die erste Finanztransaktion eine verifizierte Transaktion oder eine nicht verifizierte Transaktion ist;
Senden einer Ergebnismitteilung an jedes der ersten und zweiten Finanzinstitute, wobei die Ergebnismitteilung auf der Grundlage des Vergleichs anzeigt, ob die erste Finanztransaktion eine verifizierte Transaktion oder eine nicht verifizierte Transaktion ist.

10. Ein System (300), aufweisend das Verifikationswerkzeug nach Anspruch 9, ferner aufweisend:
eine erste Metadatenkomponente (335A) des ersten Finanzinstituts und eine zweite Metadatenkomponente (335B) des zweiten Finanzinstituts,
wobei die Metadaten-Komponenten so konfiguriert sind, dass sie in Reaktion auf eine Anforderung von Transaktions-Metadaten, die mit der ersten Finanztransaktion verbunden sind, an das Verifizierungswerkzeug nicht-kundenidentifizierende Transaktions-Metadaten, die mit einem Absender der ersten Finanztransaktion von dem ersten Finanzinstitut verbunden sind, und nicht-kundenidentifizierende Transaktions-Metadaten, die mit einem Empfänger der ersten Finanztransaktion von dem zweiten Finanzinstitut verbunden sind, senden, und
wobei die computerausführbaren Instruktionen weiterhin Instruktionen aufweisen, die, wenn sie von dem einen oder den mehreren Prozessoren ausgeführt werden, an dem Verifizierungswerkzeug den folgenden Schritt durchführen::
Bereitstellen der empfangenen, nicht mandantenidentifizierenden Transaktions-Metadaten, die dem Absender zugeordnet sind, an das zweite Finanzinstitut und der empfangenen, nicht mandantenidentifizierenden Transaktions-Metadaten, die dem Empfänger zugeordnet sind, an das erste Finanzinstitut, wenn es sich bei der ersten Finanztransaktion, basierend auf der Bestimmung in der Bestimmungsvorrichtung, um eine nicht verifizierte Transaktion handelt.

11. Das System nach Anspruch 10, wobei die Metadatenkomponenten ferner so konfiguriert sind, dass sie KYC-Informationen (Know-Your-Customer) und/oder Transaktionsverlaufsinformationen verschlüsseln und auf der Grundlage der verschlüsselten Informationen nichtkundenidentifizierende Transaktionsmetadaten erzeugen.

12. Das System nach Anspruch 10 oder 11, das ferner bei jedem der ersten und zweiten Finanzinstitute ein Alarm-Plug-in (330A, 330B) aufweist, das konfiguriert ist, um:
Finanztransaktionen zu überwachen; und
eine Warnmeldung an das Verifizierungswerkzeug zu senden, wenn eine Finanztransaktion auf der Grundlage einer oder mehrerer Transaktionsüberwachungsregeln als eine nicht verifizierte Transaktion bestimmt wird, wobei die Warnmeldung die eine oder mehrere Transaktionsüberwachungsregeln enthält, und
wobei die computerausführbaren Instruktionen weiterhin Instruktionen aufweisen, die, wenn sie von dem einen oder den mehreren Prozessoren ausgeführt werden, bei dem Verifikationswerkzeug den folgenden Schritt durchführen:
als Reaktion auf den Empfang der ersten Warnmeldung von dem ersten Finanzinstitut eine zweite Warnmeldung an das zweite Finanzinstitut zu senden.

13. Das System nach Anspruch 12, wobei die computerausführbaren Anweisungen weiterhin Anweisungen aufweisen, die, wenn sie von dem einen oder den mehreren Prozessoren ausgeführt werden, an dem Verifizierungswerkzeug den folgenden Schritt ausführen:
Empfangen einer Vielzahl von Warnmeldungen von einer Vielzahl von Finanzinstituten, wobei jede Warnmeldung mit einer Finanztransaktion verbunden ist, an der mindestens zwei Finanzinstitute beteiligt sind, und
wobei das Verifizierungswerkzeug ferner einen Klassifizierer (315) aufweist, wobei der Klassifizierer unter Verwendung von Ergebnismeldungen und mindestens einer der Warnmeldungen und Transaktions-Metadaten, die mit jeder der Vielzahl von Finanztransaktionen verbunden sind, trainiert wird, und
wobei der Klassifizierer so konfiguriert ist, dass er auf eine dritte Warnmeldung angewendet wird, die mit einer zweiten Finanztransaktion verbunden ist, um zu bestimmen, ob die zweite Finanztransaktion eine verifizierte oder eine nicht verifizierte Transaktion ist.

14. Das System nach Anspruch 10 oder 11, wobei die computerausführbaren Instruktionen weiterhin Instruktionen aufweisen, die, wenn sie von dem einen oder den mehreren Prozessoren ausgeführt werden, an dem Verifikationswerkzeug den folgenden Schritt durchführen:
Empfangen von Finanztransaktionsdaten von einer Vielzahl von Finanzinstituten, und
wobei das Verifizierungswerkzeug weiterhin einen Klassifizierer (315) aufweist, wobei der Klassifizierer unter Verwendung von Ergebnisbenachrichtigungen und mindestens einem der Finanztransaktionsdaten und nichtkundenidentifizierenden Transaktionsmetadaten, die mit jeder der Vielzahl von Finanztransaktionen verbunden sind, trainiert wird, und
wobei der trainierte Klassifizierer so konfiguriert ist, dass er auf zweite Finanztransaktionsdaten angewendet wird, die mit einer zweiten Finanztransaktion verbunden sind, um zu bestimmen, ob die zweite Finanztransaktion eine verifizierte oder eine nicht verifizierte Transaktion ist.

15. Das computerimplementierte Verfahren nach einem der Ansprüche 1 bis 8, das Verifikationswerkzeug nach Anspruch 9 oder das System nach einem der Ansprüche 10 bis 14, wobei das Verifikationswerkzeug eines der folgenden ist: ein zentrales Verifikationswerkzeug, ein verteiltes Verifikationswerkzeug, das ein oder mehrere lokale Verifikationswerkzeuge aufweist, und ein verteiltes Verifikationswerkzeug, das ein zentrales Verifikationswerkzeug und ein oder mehrere lokale Verifikationswerkzeuge aufweist.

## Revendications

1. Procédé mis en œuvre par ordinateur (200) pour vérifier les transactions financières, comprenant :
l'envoi, par un outil de vérification qui est couplé en termes de communication à chacune de première et seconde institutions financières au moyen d'un module d'interface (310), d'une notification de déclenchement (240, 245) à chacune des première et seconde institutions financières, dans lequel la notification de déclenchement est envoyée en réponse à la réception d'une notification d'alerte (210) en provenance de la première institution financière ou en réponse à la réception, en provenance de la première institution financière, de données de transaction financière qui sont associées à une première transaction financière (205) qui est initiée entre les première et seconde institutions financières et elle déclenche, au niveau d'un composant de vérification (335A, 335B) de chacune des première et seconde institutions financières, une vérification automatisée (250, 255) de la première transaction financière (205) qui met en jeu les première et seconde institutions financières ;
la réception, par l'outil de vérification, d'une notification de vérification (260, 265) en provenance du composant de vérification de chacune des première et seconde institutions financières, dans lequel la notification de vérification indique, sur la base de la vérification automatisée, si la première transaction financière est une transaction vérifiée ou une transaction non vérifiée ;
la comparaison (270), au niveau de l'outil de vérification, des notifications de vérification qui sont reçues depuis le composant de vérification de chacune des première et seconde institutions financières pour déterminer si la première transaction financière est une transaction vérifiée ou une transaction non vérifiée ; et
l'envoi, par l'outil de vérification, d'une notification de résultat (280, 285) à chacune des première et seconde institutions financières, dans lequel la notification de résultat indique, sur la base de la comparaison, si la première transaction financière est une transaction vérifiée ou une transaction non vérifiée.

2. Procédé mis en œuvre par ordinateur selon la revendication 1, comprenant en outre :
l'envoi, par l'outil de vérification, d'une requête de demande de métadonnées de transaction (220, 225) qui sont associées à la première transaction financière à chacune des première et seconde institutions financières ; et
en réponse à la requête de demande de métadonnées de transaction, la réception, par l'outil de vérification, de métadonnées de transaction ne permettant pas l'identification du client (230) qui sont associées à un émetteur de la première transaction financière en provenance de la première institution financière et de métadonnées de transaction ne permettant pas l'identification du client (235) qui sont associées à un destinataire de la première transaction financière en provenance de la seconde institution financière.

3. Procédé mis en œuvre par ordinateur selon la revendication 1 ou 2, comprenant en outre :
si, sur la base de la détermination au niveau de l'outil de vérification, la première transaction financière est une transaction non vérifiée, la fourniture des métadonnées de transaction ne permettant pas l'identification du client reçues qui sont associées à l'émetteur à la seconde institution financière et des métadonnées de transaction ne permettant pas l'identification du client reçues qui sont associées au destinataire à la première institution financière ; et
la réalisation, par chacune des première et seconde institutions financières, d'une vérification automatisée ou manuelle de la première transaction financière en utilisant les métadonnées de transaction ne permettant pas l'identification du client reçues.

4. Procédé mis en œuvre par ordinateur selon l'une quelconque des revendications 1 à 3, comprenant en outre :
la réception, par l'outil de vérification, d'une première notification d'alerte (210) en provenance de la première institution financière, dans lequel la première notification d'alerte est associée à la première transaction financière, et dans lequel la notification de déclenchement est envoyée à chacune des première et seconde institutions financières en réponse à la première notification d'alerte.

5. Procédé mis en œuvre par ordinateur selon la revendication 4, comprenant en outre :
en réponse à la réception de la première notification d'alerte en provenance de la première institution financière, l'envoi, par l'outil de vérification, d'une deuxième notification d'alerte (215) à la seconde institution financière.

6. Procédé mis en œuvre par ordinateur selon la revendication 4 ou 5, comprenant en outre :
la réception, par l'outil de vérification, d'une pluralité de notifications d'alerte en provenance d'une pluralité d'institutions financières, dans lequel chaque notification d'alerte est associée à une transaction financière qui met en jeu au moins deux institutions financières, et dans lequel chaque notification d'alerte inclut une ou plusieurs règles de surveillance de transaction qui sont appliquées à la transaction financière respective au niveau de l'institution financière respective ;
l'entraînement d'un moyen de classification en utilisant des notifications de résultat et au moins un ensemble d'informations parmi des notifications d'alerte et des métadonnées de transaction ne permettant pas l'identification du client qui sont associées à chacune de la pluralité de transactions financières ; et
l'application du moyen de classification entraîné à une troisième notification d'alerte qui est associée à une seconde transaction financière pour déterminer si la seconde transaction financière est une transaction vérifiée ou une transaction non vérifiée.

7. Procédé mis en œuvre par ordinateur selon l'une quelconque des revendications 1 à 3, comprenant en outre :
la réception, par l'outil de vérification, de données de première transaction financière qui sont associées à la première transaction financière en provenance de la première institution financière, dans lequel la notification de déclenchement est envoyée à chacune des première et seconde institutions financières en réponse à la réception des données de première transaction financière.

8. Procédé mis en œuvre par ordinateur selon la revendication 7, comprenant en outre :
la réception, par l'outil de vérification, de données de transaction financière en provenance d'une pluralité d'institutions financières ;
l'entraînement d'un moyen de classification en utilisant des notifications de résultat et au moins un ensemble de données parmi les données de transaction financière et les métadonnées de transaction ne permettant pas l'identification du client qui sont associées à chacune de la pluralité de transactions financières ; et
l'application du moyen de classification entraîné à des données de seconde transaction financière qui sont associées à une seconde transaction financière pour déterminer si la seconde transaction financière est une transaction vérifiée ou une transaction non vérifiée.

9. Outil de vérification (305) pour vérifier les transactions financières, comprenant
un module d'interface (310), dans lequel l'outil de vérification est couplé en termes de communication à une première institution financière (320A) et à une seconde institution financière (320B) au moyen du module d'interface ;
un ou plusieurs processeurs ; et
une mémoire qui comporte, stockées en son sein, des instructions pouvant être exécutées par ordinateur qui, lorsqu'elles sont exécutées par les un ou plusieurs processeurs, réalisent les étapes suivantes :
l'envoi d'une notification de déclenchement à chacune des première (320A) et seconde (320B) institutions financières, dans lequel la notification de déclenchement est envoyée en réponse à la réception d'une notification d'alerte (210) en provenance de la première institution financière ou en réponse à la réception, en provenance de la première institution financière, de données de transaction financière qui sont associées à une première transaction financière (205) qui est initiée entre les première et seconde institutions financières et elle déclenche, au niveau d'un composant de vérification (335A, 335B) de chacune des première et seconde institutions financières, une vérification automatisée d'une première transaction financière qui met en jeu les première et seconde institutions financières ;
la réception d'une notification de vérification en provenance du composant de vérification de chacune des première et seconde institutions financières, dans lequel la notification de vérification indique, sur la base de la vérification automatisée, si la première transaction financière est une transaction vérifiée ou une transaction non vérifiée ;
la comparaison des notifications de vérification qui sont reçues depuis le composant de vérification de chacune des première et seconde institutions financières pour déterminer si la première transaction financière est une transaction vérifiée ou une transaction non vérifiée ; et
l'envoi d'une notification de résultat à chacune des première et seconde institutions financières, dans lequel la notification de résultat indique, sur la base de la comparaison, si la première transaction financière est une transaction vérifiée ou une transaction non vérifiée.

10. Système (300) comprenant l'outil de vérification selon la revendication 9, comprenant en outre :
un premier composant de métadonnées (335A) de la première institution financière et un second composant de métadonnées (335B) de la seconde institution financière,
dans lequel les composants de métadonnées sont configurés pour, en réponse à une requête de demande de métadonnées de transaction qui sont associées à la première transaction financière, envoyer, à l'outil de vérification, des métadonnées de transaction ne permettant pas l'identification du client qui sont associées à un émetteur de la première transaction financière en provenance de la première institution financière et de métadonnées de transaction ne permettant pas l'identification du client qui sont associées à un destinataire de la première transaction financière en provenance de la seconde institution financière ; et
dans lequel les instructions pouvant être exécutées par ordinateur comprennent en outre des instructions qui, lorsqu'elles sont exécutées par les un ou plusieurs processeurs, réalisent, au niveau de l'outil de vérification, l'étape suivante :
la fourniture des métadonnées de transaction ne permettant pas l'identification du client reçues qui sont associées à l'émetteur à la seconde institution financière et des métadonnées de transaction ne permettant pas l'identification du client reçues qui sont associées au destinataire à la première institution financière si, sur la base de la détermination au niveau de l'outil de vérification, la première transaction financière est une transaction non vérifiée.

11. Système selon la revendication 10, dans lequel les composants de métadonnées sont en outre configurés pour crypter une information de connaissance du client, KYC, et/ou une information d'historique de transactions et pour générer des métadonnées de transaction ne permettant pas l'identification du client sur la base de l'information cryptée.

12. Système selon la revendication 10 ou 11, comprenant en outre, au niveau de chacune des première et seconde institutions financières, un plug-in d'alerte (330A, 330B) configuré pour :
surveiller les transactions financières ; et
envoyer une notification d'alerte à l'outil de vérification lorsqu'une transaction financière est déterminée comme étant une transaction non vérifiée sur la base d'une ou de plusieurs règles de surveillance de transaction, dans lequel la notification d'alerte inclut les une ou plusieurs règles de surveillance de transaction, et
dans lequel les instructions pouvant être exécutées par ordinateur comprennent en outre des instructions qui, lorsqu'elles sont exécutées par les un ou plusieurs processeurs, réalisent, au niveau de l'outil de vérification, l'étape suivante :
en réponse à la réception de la première notification d'alerte en provenance de la première institution financière, l'envoi d'une deuxième notification d'alerte à la seconde institution financière.

13. Système selon la revendication 12, dans lequel les instructions pouvant être exécutées par ordinateur comprennent en outre des instructions qui, lorsqu'elles sont exécutées par les un ou plusieurs processeurs, réalisent, au niveau de l'outil de vérification, l'étape suivante :
la réception d'une pluralité de notifications d'alerte en provenance d'une pluralité d'institutions financières, dans lequel chaque notification d'alerte est associée à une transaction financière qui met en jeu au moins deux institutions financières, et
dans lequel l'outil de vérification comprend en outre un moyen de classification (315), dans lequel le moyen de classification est entraîné en utilisant des notifications de résultat et au moins un ensemble d'informations parmi des notifications d'alerte et des métadonnées de transaction qui sont associées à chacune de la pluralité de transactions financières, et
dans lequel le moyen de classification est configuré pour être appliqué à une troisième notification d'alerte qui est associée à une seconde transaction financière pour déterminer si la seconde transaction financière est une transaction vérifiée ou une transaction non vérifiée.

14. Système selon la revendication 10 ou 11, dans lequel les instructions pouvant être exécutées par ordinateur comprennent en outre des instructions qui, lorsqu'elles sont exécutées par les un ou plusieurs processeurs, réalisent, au niveau de l'outil de vérification, l'étape suivante :
la réception de données de transaction financière en provenance d'une pluralité d'institutions financières, et
dans lequel l'outil de vérification comprend en outre un moyen de classification (315), dans lequel le moyen de classification est entraîné en utilisant des notifications de résultat et au moins un ensemble de données parmi les données de transaction financière et les métadonnées de transaction ne permettant pas l'identification du client qui sont associées à chacune de la pluralité de transactions financières, et
dans lequel le moyen de classification entraîné est configuré pour être appliqué à des données de seconde transaction financière qui sont associées à une seconde transaction financière pour déterminer si la seconde transaction financière est une transaction vérifiée ou une transaction non vérifiée.

15. Procédé mis en œuvre par ordinateur selon l'une quelconque des revendications 1 à 8, outil de vérification selon la revendication 9 ou système selon l'une quelconque des revendications 10 à 14, où l'outil de vérification est un outil de vérification parmi : un outil de vérification central, un outil de vérification réparti qui comprend un ou plusieurs outils de vérification locaux et un outil de vérification réparti qui comprend un outil de vérification central et un ou plusieurs outils de vérification locaux.
